# EUROPEAN PATENT SPECIFICATION

(11) **EP 1 860 613 B1**
(45) Date of publication and mention of the grant of the patent: **20.08.2014**
(21) Application number: 05790642.2
(22) Date of filing: 07.10.2005
(51) Int. Cl.: G06F 21/32, H04M 1/725, H04M 1/667, G06K 9/00, H04N 21/44, H04N 21/4415, H04N 21/4223, H04N 7/16, H04N 21/414

(54) **PORTABLE TERMINAL AND IMAGE INFORMATION MATCHING METHOD FOR PORTABLE TERMINAL**
TRAGBARES EINDGERÄT UND BILDINFORMATIONS-VERGLEICHSVERFAHREN FÜR EIN TRAGBARES ENDGERÄT
TERMINAL PORTABLE ET PROCEDE DE VERIFICATION DES INFORMATIONS D'IMAGE POUR LE TERMINAL PORTABLE

(30) Priority: 15.03.2005 JP 2005072377
(43) Date of publication of application: 28.11.2007
(73) Proprietor: Sharp Kabushiki Kaisha, Osaka-shi, Osaka 545-8522 (JP)
(72) Inventor: MATSUSHITA, Yoshiteru, Chiba-shi, Chiba 2610001 (JP); YASUDA, Hideyuki, Sakura-shi, Chiba 2850811 (JP); SATOKATA, Naoto, Higashi-Hiroshima-shi, Hiroshima 7390042 (JP)
(74) Representative: Müller - Hoffmann & Partner
(86) International application number: PCT/JP2005/018628
(87) International publication number: WO 2006/098053

(56) References cited:
- EP-A2- 1 467 539
- JP-A- 2 284 269
- JP-A- 10 070 594
- JP-A- 57 157 381
- JP-A- 2003 141 542
- JP-A- 2003 199 155
- JP-A- 2003 274 006
- JP-A- 2003 284 141
- US-A1- 2002 090 929
- US-A1- 2005 003 799
- US-A1- 2005 041 840

## Description

### TECHNICAL FIELD

The present invention relates to a portable terminal, an image information matching method of a portable terminal, an image information matching program, and a recording medium, and more particularly to a portable terminal that limits usable functions according to judgment by matching image information.

### BACKGROUND OF THE INVENTION

Recently, portable communication terminals such as a portable phone and an e-mail transmitting/receiving portable tool have rapidly prevailed. These portable communication terminals are used in various forms such as making accesses to the Internet and net-shopping, not to mention the original forms of use thereof such as making and receiving calls and transmitting/receiving e-mail.

These portable communication terminals are convenient to carry due to the small size thereof and have high degree of freedom of the locations thereof for making and receiving calls. Therefore, in some cases, each one individual retains a plurality of portable communication terminals. However, the terminals may be left behind or lost at places to which the terminals have been carried. Therefore, a problem has arisen that the terminals left or lost are used for unauthorized uses by malicious persons who have obtained those terminals.

However, though a conventional portable communication terminal confirms the owner thereof using a secret identification number and, when the person trying to use the terminal is not the owner thereof, the terminal makes itself difficult to be used by a third party by activating the schemes of locking the telephone number keys or locking the address book, the locking system based on a secret identification number that is a numerical code having only four digits can be easily cancelled, for example, at most ten thousand trials. Even when the number of digits of the secret identification number is increased, the locking system can be easily cancelled by increasing the number of trials.

Therefore, the conventional portable communication terminal can not fully prevent the terminal from being used maliciously by another person, and improvement of precision in confirming the owner himself/herself is demanded such that the user of the terminal can use the terminal without anxiety.

A method to solve the above can be a method of confirming the owner himself/herself using biometrics information such as a face or a finger print.

For example, according to the technique of Patent Document 1: pictures of the face, etc., of the owner of a portable phone is taken by the camera of the portable phone and is registered in a base station for the portable phone; when the owner starts to use the portable phone, the owner sends a picture of his/her face taken by the camera, etc. ; and, when the picture, etc., sent to the station coincides with any picture, etc., registered in the station, the use of the telephone is permitted. However, when the person to use the portable phone is not the owner, operations of the portable phone are prevented and warning is issued using a warning sound.

Thereby, the security of a portable communication terminal can be enhanced.

Another method can be a method according to which a user has with him/her an apparatus that stores information identifying the user himself/herself, and a device is caused to read the information and confirms the user himself/herself.

For example, according to the technique of Patent Document 2: when a predetermined operation is made to a folding-type portable phone of an authorized user, an acquisition request for authorized key information is issued through Bluetooth to a function limit releasing apparatus by the folding-type portable phone; and, only when the authorized key information is acquired, the limit is released.

Thereby, the phone can let the authorized user use the phone without requiring memorizing any secret identification number, and unauthorized use by a third party can be more strictly prevented when the phone has been lost or stolen.
Patent Document 1: Japanese Patent Publication JP 2003 284141
Patent Document 2: Japanese Patent Publication JP 2003 309643

Patent document US 2002/0090929 discloses a radio terminal having a locking function is provided and includes a photographing unit for capturing a user image to generate a pattern image of the user image; a memory for storing the pattern image of the user image; and a controlling unit for comparing the pattern image of the user image, from the photographing unit, with a pattern information of a reference user image stored in the memory, wherein the controlling unit cancels the locked state of the radio terminal, if the pattern information of the reference user image is the same as the pattern image of the user image.

Patent document US 2005/0041840 discloses a mobile phone with image recognition function for allowing users to use the mobile phone according to an image recognition acknowledgement result includes a housing, an image-capturing module including a lens for capturing an image, and an image recognition module installed inside the housing for recognizing the image captured by the lens of the image-capturing module.

Patent document US 2005/0003799 discloses a system for limiting access to a mobile communication terminal comprises user interface for providing an option to select an authentication method to lock the mobile communication terminal; and memory for storing a plurality of lock codes, including image lock codes, inputted into the mobile communication terminal for locking the mobile communication terminal.

The above objects are solved by the claimed matter according to the independent claims.

### DISCLOSURE OF THE INVENTION

### PROBLEMS TO BE SOLVED BY THE INVENTION

However, according to the technique of the above Patent Document 1, drawbacks are present that an annoying operation of selecting the item for face authentication from a menu by key-inputting is necessary to execute the face authentication and it takes a long time for this operation.

According to the technique of the above Patent Document 2, a drawback is present that the authorized user must always have with him/her the function limit releasing apparatus that stores the authorized key information.

The present invention has been made considering the above circumstances and the object of the present invention is to provide a portable terminal, an image information matching method of a portable terminal, an image information matching program, and a computer-readable recording medium storing the program, that can limit and release usable functions of the portable terminal without any special operation or without having any special apparatus.

### MEANS FOR SOLVING THE PROBLEMS

To solve the above problems, the present invention has the following configuration.

This portable terminal has an imaging means and comprises: a state detecting means that detects the state and form of the portable terminal; a matching information storing means that stores image information for matching; and a matching means that matches image information acquired by the imaging means with the image information stored in the matching information storing means, wherein when the state detecting means detects that the state of the portable terminal is a predetermined state, it is judged that the terminal becomes to be in a checkable state and causes the imaging means to acquire image information.

Further, the portable terminal comprises: a judging means that judges whether a predetermined matching condition is satisfied by both pieces of image information based on the result of the matching by the matching means; a processing means that executes a predetermined process; and a controlling means that controls the process of the processing means based on the result of the judgment by the judging means.

This portable terminal displays the image from the imaging means on the displaying means when at least the imaging means is operating and, it becomes a state where shooting is possible, the matching operation may be conducted after inquiring of the user whether the matching is executed or the matching operation may be executed without the inquiring.

When the imaging means acquires the image information, the terminal reports that the image information has been acquired and displays a message such as "Now, Matching" that shows the matching is being executed.

During the matching, when a second matching means is operated, the matching means is stopped and the second matching means is started up or the second matching means may be started up in parallel to the matching means.

The limit of the time period taken for the matching may be set in advance and a time passage reporting means may report the time that has passed since the start of the matching.

In this case, when the time spent for the matching has exceeded the time limit set in advance, or when the matching is finished, the terminal stops the imaging means and displays a screen other than a shooting screen on the displaying means.

When the time spent for the matching has exceeded the time limit set in advance, or when the matching is failed, the terminal may start up the second matching means that is different from the matching means.

When the judging means judges that both pieces of the image information satisfies a predetermined matching condition, the portable terminal stops the imaging means, displays on the displaying means a screen other than the shooting screen, and releases the function limit for the user.

When the judging means judges that the predetermined matching condition is not satisfied, a notice is issued to the user or a predetermined address by any one or any combination of the following. In this case, when the predetermined condition is not satisfied even after the matching has been executed for a predetermined number of times, the matching may first be determined to have been failed.
(1) A predetermined reporting is executed or a predetermined notice is transferred to a predetermined address as to the failure of the matching by a reporting means or a communicating means incorporated in the portable terminal.
(2) The image information shot by the imaging means is stored in a non-matching image storing means or the image information shot by the imaging means is transferred to a predetermined address by using a communicating means.
(3) The second matching means that is different from the matching means is started up.
(4) Position information acquired by a position information acquiring means is stored in a position information storing means. In this case, the position information may be continuously acquired and stored. Otherwise, the position information stored in the position information storing means is transferred to a predetermined address by using a communicating means. In this case, the position information may continuously be transferred.
(5) The terminal stops the imaging means and displays on the displaying means a screen other than the shooting screen.

With the above configuration, when the state and/or the form of the portable terminal have/has respectively become a predetermined state and/or a predetermined form, the terminal starts up the imaging means and executes the image matching. Therefore, usable functions of the portable terminal (for example, a user interface such as operations and displays of the terminal, an e-money function, making and receiving calls, and receiving e-mail) can be limited and released without executing any special operation and without having any special apparatus.

For example, the portable terminal is applied to the following five types of portable terminals.

### (1) Straight-Type Portable Terminal

A straight-type (one-body-type) portable terminal is configured by, in one housing, a displaying portion that displays character information or image information and an operating portion having a group of information inputting keys disposed thereon. In the case of this terminal, when the state detecting means detects that a user operates the portable terminal, the terminal judges that the terminal itself becomes to be in a checkable state, and executes the matching and judgment using the image information shot by the imaging means.

### (2) Folding-Type Portable Terminal

A folding-type portable terminal is configured by rotatably connecting, using a connecting portion, an upper housing including a displaying portion that displays character information or image information and a lower housing including an operating portion having a group of information inputting keys disposed thereon. In the case of this terminal, when the state detecting means detects that a user has opened the housings of the portable terminal, the terminal judges that the terminal itself is in the checkable state, and executes the matching and judgment using the image information shot by the imaging means.

### (3) Sliding-Type Portable Terminal

A sliding-type portable terminal has an upper housing including a displaying portion that displays character information or image information and a lower housing including an operating portion having a group of information inputting keys disposed thereon, and is configured by connecting the upper housing slidably to the lower housing in the longitudinal direction of the lower housing or by connecting the upper housing rotatably (slidably) to the lower housing in a direction in a plane parallel to the lower housing. In the case of this terminal, when the state detecting means detects that a user has slid the housings of the portable terminal against each other, the terminal judges that the terminal itself is in the checkable state, and executes the matching and judgment using the image information shot by the imaging means.

### (4) Rotatable-Displaying-Portion-Type Portable Terminal

A rotatable-displaying-portion-type portable terminal has an upper housing including a displaying portion that displays character information or image information and a lower housing including an operating portion having a plurality of information inputting keys disposed thereon, and is configured by connecting the housings roratably using a connecting portion therebetween such that the housings can be opened and closed relative to each other and by connecting the housings such that the upper housing is rotatable in a plane perpendicular to the rotation plane of the opening and closing. In the case of this terminal, when the state detecting means detects that a user has opened the housings of the portable terminal, the terminal judges that the terminal itself is in the checkable state, and executes the matching and judgment using the image information shot by the imaging means.

Otherwise, when the state detecting means detects that the portable terminal is in a state where the terminal can be viewed and that the user has operated the terminal, the terminal judges that the terminal itself is in the checkable state, and executes the matching and judgment using the image information shot by the imaging means.

### (5) Rotatable-Camera-Attached Portable Terminal

When the state detecting means has detected that a user has operated the imaging means and a rotatable camera has faced an item to be matched, the terminal judges that the terminal itself becomes to be in the checkable state, and executes the matching and judgment using the image information shot by the imaging means.

The present invention may be configured by connecting, by a network, a matching server having a matching information storing means that stores image information to judge by matching a user who can use a portable terminal, and a portable terminal having an imaging means.

When the portable terminal detects that the state and/or the form of the terminal have/has respectively become a predetermined state and/or a predetermined form, the terminal causes the imaging means to acquire image information of the property to be matched, transmits the image information and the identifying information of the terminal to the matching server, receives the judgment result from the matching server, and limits or releases the functions usable for the user based on the judgment result.

The matching server judges whether a predetermined matching condition is satisfied by the image information received from the portable terminal and the image information stored in the matching information storing means and transfers the result of the judgment.

When the judgment by matching is successfully finished, the matching server notifies the portable terminal of a notice of success.

When the matching has been failed, the server causes a communication means to notify a predetermined contact registered in advance of a message "Matching Failed". In this case, the server may send the image information received from the portable terminal in addition to the notice.

According to the present invention, the above problems can be solved by an image information matching program or a computer-readable recording medium that records the program to realize the functions of the portable terminal configured as above.

### EFFECT OF THE INVENTION

According to the invention, matching is executed in a series of actions of operating a portable terminal and the usable functions of the terminal can be limited and released without any special operations and without having any special apparatus.

### BRIEF DESCRIPTION OF THE DRAWINGS

[Fig. 1] Fig. 1 is a functional block diagram of an exemplary inner configuration of a portable terminal used in an embodiment.
[Fig. 2] Fig. 2 is an appearance view of a portable terminal according to a first embodiment.
[Fig. 3] Fig. 3 is a block diagram of the functional configuration of the first embodiment.
[Fig. 4] Fig. 4 is a flowchart for explaining a procedure of executing matching for a person to be permitted using the portable terminal according to the first embodiment.
[Fig. 5] Fig. 5 is an appearance view of a portable terminal according to a second embodiment.
[Fig. 6] Fig. 6 is a flowchart for explaining a procedure of executing matching for a person to be permitted using the portable terminal according to the second embodiment.
[Fig. 7] Fig. 7 is an appearance view of a portable terminal according to a third embodiment.
[Fig. 8] Fig. 8 is another appearance view of the portable terminal according to the third embodiment.
[Fig. 9] Fig. 9 is an appearance view of a portable terminal according to a fourth embodiment.
[Fig. 10] Fig. 10 is a flowchart for explaining a procedure of executing matching for a person to be permitted using the portable terminal according to the fourth embodiment.
[Fig. 11] Fig. 11 is an appearance view of a portable terminal according to a fifth embodiment.
[Fig. 12] Fig. 12 is a flowchart for explaining a procedure of executing matching for a person to be permitted using the portable terminal according to the fifth embodiment.

### EXPLANATION OF REFERENCE NUMERALS

11...controlling portion, 12...registration updating portion, 13...matching information storing portion, 14...image acquiring portion, 15...matching portion, 16...judging
   portion, 17...state detecting portion, 18 ... reporting portion, 30, 31, 32...housing, 33...(first) magnetic sensor, 36...second magnetic sensor, 34...magnet,
101... communication I/F, 102...communication controlling portion, 103...volatile memory, 104...display controlling portion, 105...displaying portion, 106...sensor, 107...image processing portion, 108...imaging portion (camera, rotatable camera), 109...image comparing portion, 110...non-volatile memory, 111...operating portion, 112...LED, 113...speaker, 114...main controlling portion.

### PREFERRED EMBODIMENTS OF THE INVENTION

Description will be given for preferred embodiments according to a portable terminal of the present invention referring to the drawings.

In the embodiments, description will be given taking an example of a portable phone for which limit on use of functions such as an user interface such as operations and displays, an e-money function, making and receiving calls, and receiving e-mail can not be released to prevent personal information stored in an internal memory of the portable phone from being read maliciously by a third person when the matching is not successfully finished. However, the present invention can be equally applied to an electronic device, other than the portable phones described below, that has an imaging means that obtains image information and a matching means that matches the obtained image information with image information stored therein in advance.

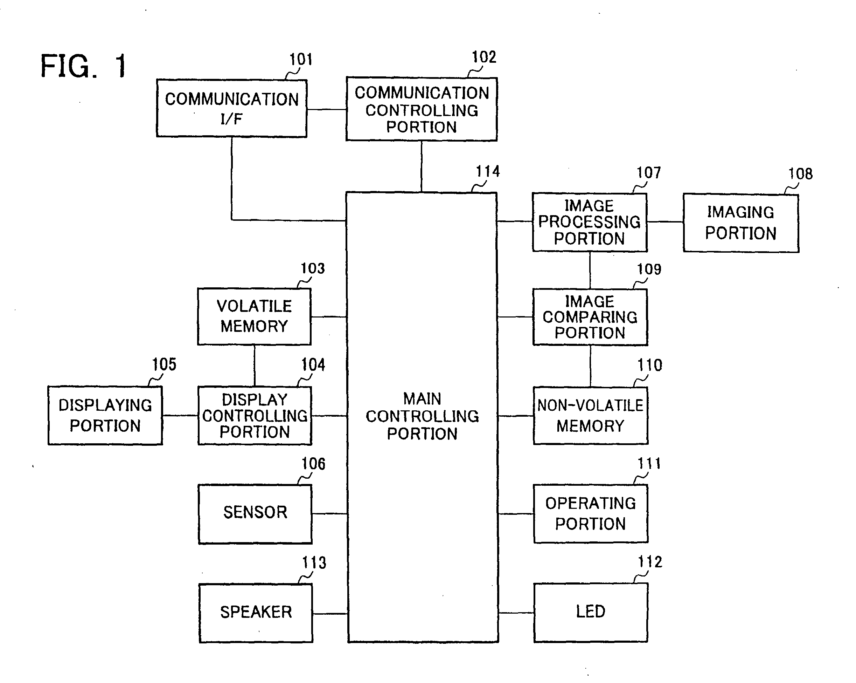

Fig. 1 is a functional block diagram of an exemplary inner configuration of a portable terminal used in an embodiment. In Fig. 1, the portable terminal includes a communication I/F (InterFace) 101, a communication controlling portion 102, a volatile memory 103, a display controlling portion 104, a displaying portion 105, a sensor 106, an image processing portion 107, an imaging portion 108, an image comparing portion 109, a non-volatile memory 110, an operating portion 111, an LED (Light Emitting Diode: light emitting element) 112, a speaker 113, and a main controlling portion 114, in addition to the hardware that configures the ordinary functions of a portable phone.

The communication I/F 101 demodulates a radio wave received from a base station through an antenna during reception. And, the communication I/F 101 modulates and amplifies character data, image data, etc., transmitted from the communication controlling portion 102 and transmits the data to a base station through the antenna during transmission.

The communication controlling portion 102 sends received data such as character data and image data modulated by the communication I/F 101 to the main controlling portion 114 based on a predetermined communication protocol.

The volatile memory 103 includes a semiconductor memory, etc., such as a RAM (Random Access Memory) that is a working storing area and stores temporary data concerning communication, image data that is shot, data used in calculation, and the result of the calculation, etc.

The display controlling portion 104 drives and controls the displaying portion 105 according to the image data to be displayed on the displaying portion 105, based on a control signal transmitted from the main controlling portion 114.

The displaying portion 105 is realized by a liquid crystal display, an EL (Electro-Luminescence) display, etc., and displays an image based on the image data sent through the display controlling portion 104.

The sensor 106 includes sensors such as a magnetic sensor that detects the magnetism of a magnet disposed on the terminal, an angular sensor that detects an opening angle formed by the two housings, another angular sensor that detects the rotation angle formed by the two housings, and transmits the detection results from the respective sensors to the main controlling portion 114.

The image processing portion 107 includes an amplifying portion, an A/D (Analog/Digital) converting portion, and a signal processing portion. The amplifying portion amplifies electric signals sent from the imaging portion 108 and the communication controlling portion 102 and sends the signals to the A/D converting portion. The A/D converting portion converts the electric signal (analog) amplified by the amplifying portion into digital signals, outputs image data, and sends the data to the signal processing portion. The signal processing portion executes signal processing such as an interpolating process for pixels to the image data sent from the A/D converting portion. The signal processing portion outputs the image data applied with the signal processing to the volatile memory 103 based on a controlling signal sent from the main controlling portion 114.

The imaging portion 108 includes an imaging lens and an imaging device such as a CCD (Charge Coupled Device) image sensor or a CMOS (Complementary Metal Oxide Semiconductor), and converts a light beam that has entered the imaging lens to electric signals using the imaging device.

The image comparing portion 109 compares the image data sent from the image processing portion 107 with the image stored in the non-volatile memory 110, and transmits the result as to whether the matching is within a predetermined scope to the main controlling portion 114.

The non-volatile memory 110 is a read-only or rewritable memory and stores a program necessary when the main controlling portion 114 operates, communication controlling data, data for matching, etc.

The operating portion 111 includes function keys such as keys to input numerals and characters, a cursor key to move a selected item upward, downward, to the right, and to the left, a mode key to switch among various functions, a shutter key to shoot while a camera mode is activated, and a mail key to display a mail creating screen.

The LED 112 emits a light beam in colors and illuminating patterns according to an instruction from the main controlling portion 114.

The speaker 113 emits sound according to an instruction from the main controlling portion 114.

The main controlling portion 114 includes a micro-computer, etc., and controls operations of the entire components configuring the terminal.

Description will be given for the following five types of portable terminals having the above hardware configuration.

### (1) Straight-Type Portable Terminal

Present invention refers to a portable terminal configured by, in one housing, a displaying portion that displays character information or image information and an operating portion having a group of information inputting keys disposed thereon, as "straight-type (one-body-type) portable terminal".

### (2) Folding-Type Portable Terminal

The present invention refers to a portable terminal configured by rotatably connecting, using a connecting portion, an upper housing including a displaying portion that displays character information or image information and a lower housing including an operating portion having a group of information inputting keys disposed thereon as "folding-type portable terminal".

### (3) Sliding-Type Portable Terminal

The present invention refers to a portable terminal configured by connecting an upper housing including a displaying portion that displays character information or image information and a lower housing including an operating portion having a group of information inputting keys disposed thereon so that the upper housing is able to be slid in the longitudinal direction relative to the lower housing and adapted to be used being shrunk for the housings to overlap each other and being elongated by sliding the housings such that the housings are separated in the longitudinal direction thereof, as "sliding-type portable terminal". Also, the present invention refers to a portable terminal configured by connecting the upper housing to the lower housing rotatably (slidably) in a direction of a plane parallel against the lower housing and adapted to be used being shrunk and elongated by rotating (sliding) for the housings to overlap each other and being elongated by sliding the housings such that the housings are separated, as "sliding-type portable terminal".

### (4) Rotatable-Displaying-Portion-Type Portable Terminal

The present invention refers to a portable terminal having an upper housing including a displaying portion that displays character information or image information and a lower housing including an operating portion having a plurality of information inputting keys disposed thereon and configured by connecting the housings roratably using a connecting portion therebetween such that the housings can be opened and closed and connecting the housings such that the upper housing is rotatable in a plane perpendicular to the rotation plane of the opening and closing, as "rotatable-displaying-portion-type portable terminal".

### (5) Rotatable-Camera-Attached Portable Terminal

Each of the above portable terminal of which the camera is a rotatable camera is referred to as "rotatable-camera-attached portable terminal".

### <First Embodiment>

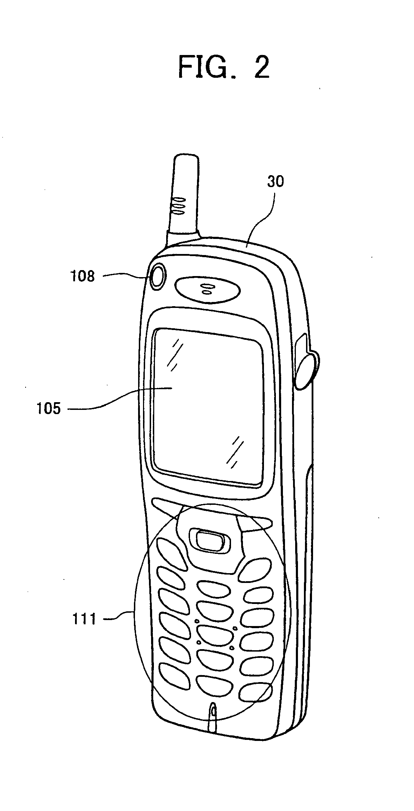

Fig. 2 is an appearance view of a straight-type portable terminal according to a first embodiment.

The portable terminal has a housing 30 that integrates the displaying portion 105 and the operating portion 111, and the imaging portion 108 is disposed in an upper portion of the displaying portion 105. The imaging portion (camera) 108 incorporates an automatic focusing function.

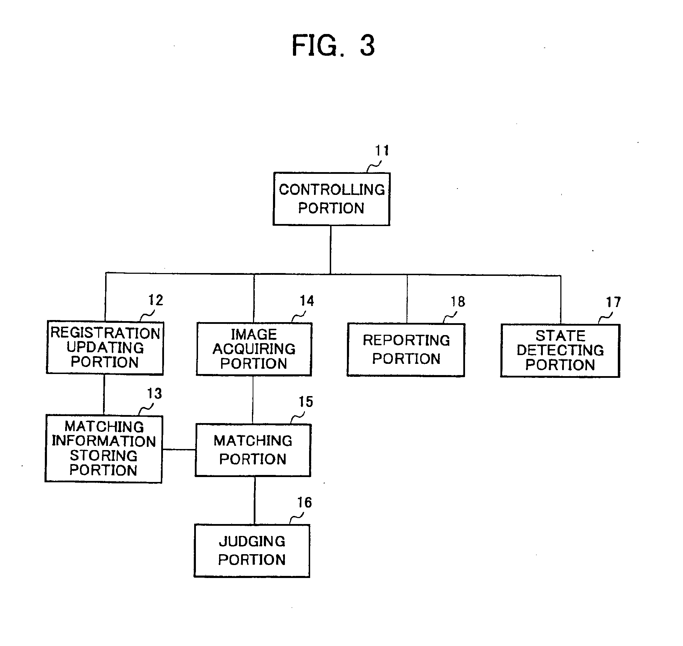

Fig. 3 is a block diagram of the functional configuration of the first embodiment. In Fig. 3, in addition to the functional configuration of an ordinary portable terminal, the portable terminal includes an controlling portion 11 that controls the entire portable terminal, a registration updating portion 12 that registers and updates matching information to match a person to be permitted to use the terminal, a matching information storing portion 13 that stores matching information to match a person to be permitted to use the terminal (hereinafter, "the person to be permitted"), an image acquiring portion 14 that acquires image information using the imaging portion 108, a matching portion 15 that matches the image information acquired by the image acquiring portion 14 with the matching information stored in the matching information storing portion 13, a judging portion 16 that judges based on the matching result whether a predetermined matching condition is satisfied, a state detecting portion 17 that detects that the state of the terminal becomes a predetermined state, and a reporting portion 18 that notifies of an error message when the matching judgment is failed.

Description will be given for registration of the matching information to match whether a person is the person to be permitted.

After setting the state of the terminal to a state where the functions of the portable terminal are not limited such as the state of the terminal upon the purchase thereof or setting the state where the functions of the terminal are not limited by a secret identification number for matching information registration, the matching information of the person to be permitted is registered.

After the purchase of the terminal, a change may arise to the matching information over time (for example, a picture of the face) or the person himself/herself to be permitted may change. Therefore, after releasing the limit on the functions of the terminal by the secret identification number for the matching information registration, the matching information of the person to be permitted is updated.

When the terminal is in a state where the functions are not limited, a matching information registration menu is selected by operating the operating portion 111 and the registration updating portion 12 is started up.

The registration updating portion 12 starts up the image acquiring portion 14, acquires the image information of the item presented by the person to be permitted, and displays the acquired information on the displaying portion 105. During this procedure, a message "Acquiring Matching Information" is displayed on the displaying portion 105. When an image that is considered to be suitable for matching is displayed, the person to be permitted operates a registration button. In this case, the item to be shot may be a face, a property that identifies the person to be permitted, a portion of the face (an eye, a nose, a mouth, an eye brow, etc.), the shape of a hand, handwriting, etc.

Though the image information that has been shot may be registered, the characteristic amounts of the profile, color tones, colors, disposition, etc., of the image information are extracted and registered after unifying the sizes of the items to be registered (for example, the size of the face) to a certain size.

When the registration button is operated, the registration updating portion 12 records (when already registered, updates) the image information that the person to be permitted has presented, into (in) the matching information storing portion 13.

A second matching method for the case of failure of the matching may be registered. The second matching method can be, for example, a secret identification number (password) and biometric authentication (using a finger print, an iris, a voice print, etc.).

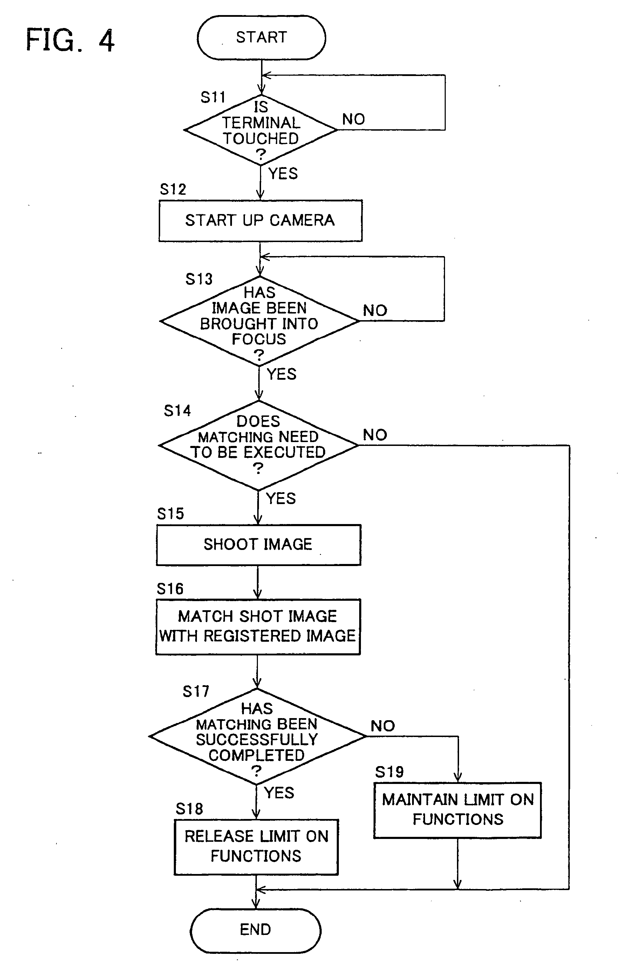

Referring to a flowchart of Fig. 4, description will be given for a procedure of executing the matching of the person to be permitted by the portable terminal according to the first embodiment.

The state detecting portion 17 detects that a user touches the portable terminal and notifies the controlling portion 11 of the fact (step S11).

At this time, the state detecting portion 17 detects using the sensor 106 that the user touches the housing 30 of the portable terminal, the displaying portion 105 having a touch panel, the operating portion 11 (any of the keys), etc. Otherwise, when the sensor 106 has an acceleration sensor or a sound recognition sensor, in response to the variation of the values detected by such sensors, the portion 17 may detect that the user touches the portable terminal.

When the controlling portion 11 receives from the state detecting portion 17 a notice notifying that the user touches the terminal (step S11/YES), the terminal is shifted into an image matching mode and the image acquiring portion 14 starts up the imaging portion (camera) 108 (step S12). The imaging portion 108 starts focusing on the item presented by the user (for example, the face) using the automatic focusing function (step S13). When the focusing is completed, the terminal inquires of the user whether to execute the matching. When an input indicating that the matching should be executed is received (step S14/YES), the procedure is advanced to step S15.

When an input indicating that the matching should not be executed is received from the user (step S14/NO), the procedure may be ended without releasing a predetermined limit (for example, locking) on the functions of the portable terminal for the user or the terminal may start up a second matching means (using a finger print, a vein, an iris, a password, etc.). Though the second matching method may be a predetermined method, the terminal may use the matching method that is registered in the matching information storing portion 13 for the case where the matching has been failed.

The matching may be executed automatically without inquiring about the matching.

When the user specifies that the matching should be executed, an image is shot (step S15).

In this case, when the image is shot, an image inputted by the imaging portion 108 is displayed on the displaying portion 105 and a message is also displayed stating that processing is being executed in the image matching mode. The image having been shot is delivered from the image acquiring portion 14 to the controlling portion 11.

The controlling portion 11 starts up the matching portion 15. At this time, the matching portion 15 may be started up together with the image acquiring portion 14 when the terminal is shifted to be in the image matching mode. The controlling portion 11 may further report that the acquisition of the image has been completed to the displaying portion 105, the LED 112, the speaker 113, etc.

The matching portion 15 compares the image information acquired by the image acquiring portion 14 with the matching information that has been presented by the person to be permitted and stored in the matching information storing portion 13, and the judging portion 16 judges whether the two images satisfy a predetermined matching condition (step S16).

When the judging portion 16 judges that the two images satisfy the predetermined matching condition (step S17/YES), the imaging portion 108 is stopped and the predetermined limit on the functions of the portable terminal (for example, the locking) for the user is released. The display on the displaying portion 105 is switched to a display screen for the functions permitted for the user and the terminal waits for the operation by the user (step S18).

When the judging portion 16 judges that the two images do not satisfy the predetermined matching condition (step S17/NO), the imaging portion 108 is stopped, the displaying portion 105 is caused to display a screen other than the shooting screen, and the limit on the functions for the user is maintained (step S19).

In this case, the reporting portion 18 may display a message "Person to Be Permitted Not Confirmed" on the displaying portion 105. Otherwise, until the predetermined matching condition is satisfied, the camera may repeatedly shoot images or matching may be continued according to the second matching method.

When the predetermined matching condition is not satisfied even when matching by comparison is executed for a predetermined number of times, the reporting portion 18 may notify with a message "the portable terminal (of the telephone number or the serial number of the terminal) is operated by a person who is not the person to be permitted" to an address registered in advance.

When the matching is failed, the image information shot by the image acquiring portion 14 may be stored in a non-matching image storing portion. When the person to be permitted views the non-matching image stored in this manner, a person who tries to use the terminal maliciously can be seen at a glance.

When the portable terminal includes a communicating means, the communicating means may transfer a notice carrying a message "the portable terminal (of the telephone number or the serial number of the terminal) is being operated by a person other than the person to be permitted" to an address registered in advance or may transfer a notice to which the above non-matching image is attached.

When the portable terminal includes a position acquiring means, in the case of failure of the matching, the position information storing means may store the position information of the portable terminal acquired by the position information acquiring means. When the person to be permitted views the position information stored in this manner, it becomes easy to trace what course is taken. The position information is acquired continuously because it can be considered that a malicious person who has picked up the portable terminal moves from one place to another at which the matching is executed.

When the portable terminal includes a communicating means, using the position information stored in the position information storing means, the communicating means may transfer a notice carrying a message "(at what place) the portable terminal (of the telephone number or the serial number of the terminal) is being operated by a person other than the person to be permitted" to an address registered in advance or may transfer a notice to which the above non-matching image is attached. Using this notice, the position information is transferred continuously because it can be considered that a malicious person who has picked up the portable terminal moves from one place to another at which the matching is executed.

When the terminal is shifted to be in the image matching mode, a time period necessary for the matching to be completed may be limited.

In this case, the terminal includes a matching time limit setting portion that sets in advance the limit of the time necessary for matching (time limit) in a matching time limit storing portion, a measuring portion that measures the time that has passed, a passed time reporting portion that reports the time that has passed, and a time judging portion that judges whether the time that has passed has exceeded the time limit.

The matching time limit setting portion sets the time limit for the matching as a default value or sets in the matching time limit storing portion the time limit having been set by the user.

When the image matching mode is started, the measuring portion measures the time having passed for executing the matching since the start of the matching.

In addition to a message stating that the image matching mode is being executed, the passed time reporting portion calculates the remaining time to the time limit from the time limit stored in the matching time limit storing portion and the time that has passed measured by the measuring portion, and reports the remaining time. The report reports the state where the remaining time becomes less by not only displaying the time that has passed as a numerical value but also displaying the time that has passed as a bar, displaying the state of occurrence of bubbles, reporting by variation of colors and patterns using the LED 112, or outputting variation of sound to the speaker 113.

The time judging portion judges whether the time that has passed measured by the measuring portion exceeds the time limit stored in the matching time limit storing portion and, when the time limit is exceeded, notifies the controlling portion 11 that the matching is not completed yet.

When the controlling portion 11 receives the notice of the incomplete matching, the portion 11 processes as "a case of failure of matching" as above. Otherwise, the matching may be executed again according to "the second matching means".

In the case where the matching is continued using the second matching method when the matching process is not completed within the time limit of the matching or when the judging portion 16 judges that the matching condition is not satisfied, a limit is preset for the number of times of execution of the re-matching and, when this limit on the number of times is exceeded, no more re-matching is executed and the above reporting is executed considering that the matching has failed.

When the user has suffered injury to his/her face, the user may desire to execute the matching according to the second matching method before the matching portion 15 judges that the matching has failed. In such a case, when operation is executed according to the second matching method during the matching by the matching portion 15, the execution by the matching portion 15 is stopped and the second matching method is executed. Otherwise, the second matching method may be executed in parallel to the matching by the matching portion 15.

The operation of the second matching method is, for example, "when a finger print sensor has detected a finger (finger print authentication)", "when it is detected that the imaging portion 108 is shooting a hand (vein authentication) ", "when it is detected that the imaging portion 108 is shooting an eye (iris authentication)", or "when it is detected that keys are pressed to input a password (password authentication)".

### <Second Embodiment>

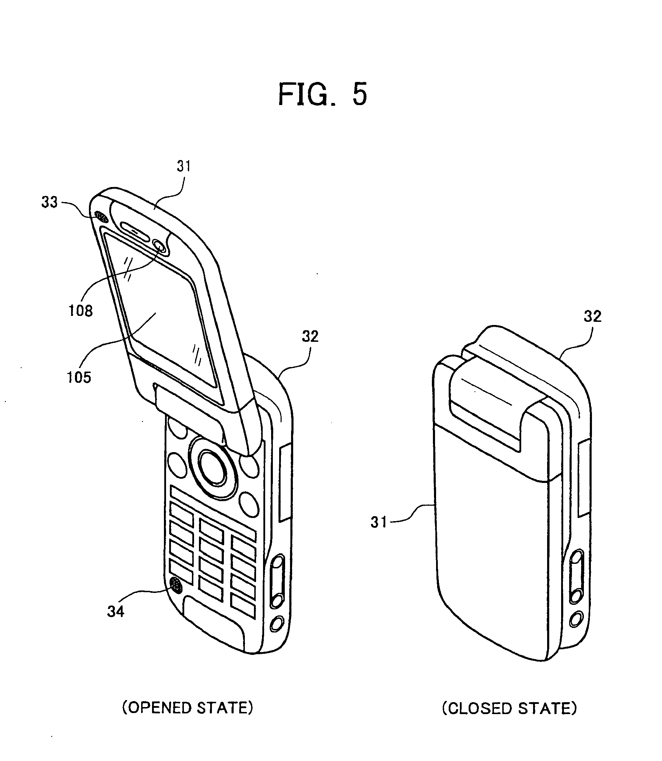

Fig. 5 is an appearance view of a folding-type portable terminal according to a second embodiment.

This portable terminal includes a first housing 31 and a second housing 32 connected to each other such that the housings can be freely opened and closed, and the first housing 31 and the second housing 32 can be folded. The imaging portion (camera) 108 is disposed in the upper portion and inside of the first housing 31. The imaging portion 108 incorporates an automatic focusing function.

Because the functional configuration of the second embodiment is same as that of the first embodiment (see Fig. 3), description will be given for the points that differ from those of the first embodiment.

In the folding-type portable terminal of the second embodiment, a magnet is installed as the sensor 106 and a magnetic sensor that detects the magnetism of the magnet is used. As exemplified in Fig. 5, when the first housing 31 and the second housing 32 are closed, the magnet and the magnetic sensor are respectively brought to positions adjacent to each other such that the magnetic sensor 33 can detect the magnetism of the magnet 34 and, when the housings 31 and 32 are opened, are respectively brought to positions away from each other such that the magnetic sensor 33 does not detect the magnetism.

When the magnetic sensor 33 detects the magnetism of the magnet 34, the state detecting portion 17 judges that the terminal is in a closed state and, when the magnetic sensor 33 stops detecting the magnetism for the first time, the portion 17 judges that the terminal becomes to be in an opened state, and notifies the controlling portion 11 that the terminal becomes to be in a state where the matching can be executed.

Though the state detecting portion 17 judges the checkable state, using the magnet 34 and the magnetic sensor 33, by providing an item with which it can be seen that the user makes the portable terminal start to be used, for example, a pressure sensitive switch between the housings, the portion 17 may judge the state from occurrence of variation to a pressure sensing state due to opening of the housings.

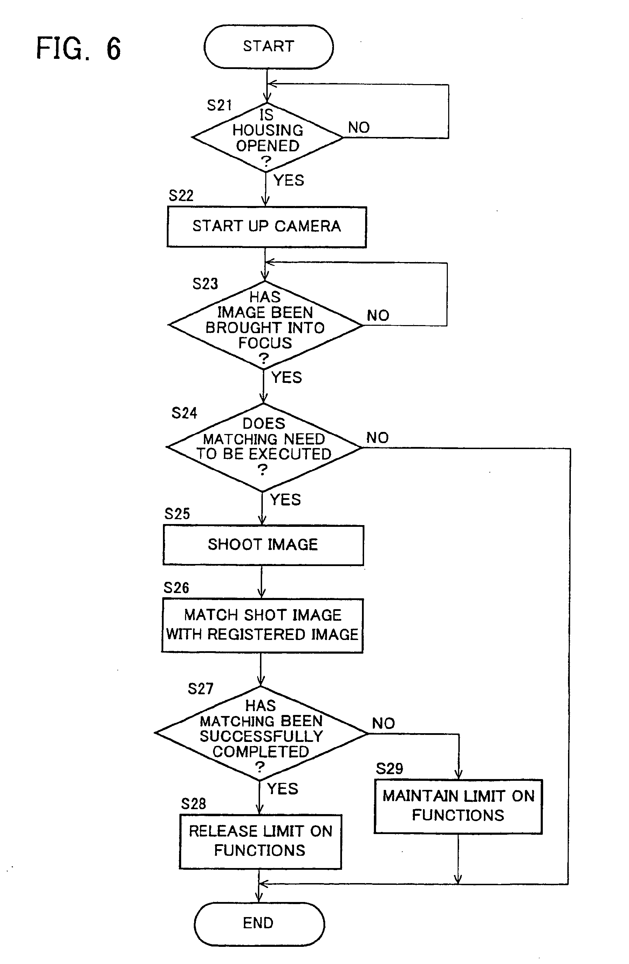

Referring to a flowchart of Fig. 6, description will be given for a procedure of executing the matching of the person to be permitted in the portable terminal according to the second embodiment.

The state detecting portion 17 detects that the portable terminal becomes to have a form of the checkable state and notifies the controlling portion 11 of this fact (step S21).

At this step, when the user has put the first housing 31 and the second housing 32 into the opened state from the closed state thereof, the state detecting portion 17 judges that the user has put the housings into the opened state because the magnetic sensor 33 has stopped detecting the magnetism, and notifies the controlling portion 11 of this fact. Otherwise, when the sensor 106 incorporates a sensor for the angle of opening and closing of the housings, it may be judged from the variation of the detected value by the sensor that the user has put the portable terminal into the opened state.

When the controlling portion 11 receives a notice notifying that the terminal becomes to be in the checkable state (step S21/YES) , the terminal is shifted into the image matching mode and the image acquiring portion 14 starts up the imaging portion (camera) 108 (step S22). The imaging portion 108 starts focusing on the item presented by the user (for example, the face) using the automatic focusing function (step S23). When the focusing is completed, the terminal inquires of the user whether to execute the matching. When an input indicating that the matching should be executed is received (step S24 /YES), the procedure is advanced to step S25.

When an input indicating that the matching should not be executed is received from the user (step S24/NO), the procedure may be ended without releasing a predetermined limit (for example, locking) on the functions of the portable terminal for the user or the terminal may start up a second matching means (using a finger print, a vein, an iris, a password, etc.). Though the second matching method may be a predetermined method, the terminal may use the matching method that is registered in the matching information storing portion 13 for the case where the matching has been failed.

The matching may be executed automatically without inquiring about the matching.

When the user specifies that the matching should be executed, an image is shot (step S25).

In this case, when the image is shot, an image inputted by the imaging portion 108 is displayed on the displaying portion 105 and a message is also displayed stating that processing is being executed in the image matching mode. The image having been shot is delivered from the image acquiring portion 14 to the controlling portion 11.

The controlling portion 11 starts up the matching portion 15. At this time, the matching portion 15 may be started up together with the image acquiring portion 14 when the terminal is shifted to be in the image matching mode.

The matching portion 15 compares the image information acquired by the image acquiring portion 14 with the matching information that has been presented by the person to be permitted and stored in the matching information storing portion 13, and the judging portion 16 judges whether the two images satisfy a predetermined matching condition (step S26).

When the judging portion 16 judges that the two images satisfy the predetermined matching condition (step S27/YES), the imaging portion 108 is stopped and the predetermined limit on the functions of the portable terminal (for example, the locking) for the user is released. The display on the displaying portion 105 is switched to a display screen for the functions permitted for the user and the terminal waits for the operation by the user (step S28).

When the judging portion 16 judges that the two images do not satisfy the predetermined matching condition (step S27/NO), the imaging portion 108 is stopped, and the limit on the functions for the user is maintained (step S29).

When the matching is not completed or the matching is failed, the notice for warning and the time limit on the matching, etc. , are same as those of the above first embodiment and the description thereof is omitted.

### <Third Embodiment>

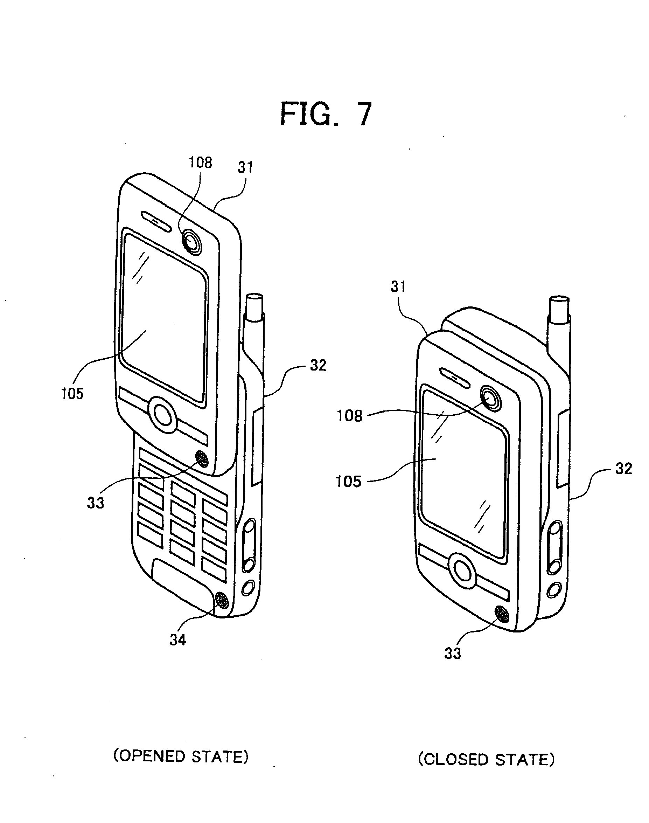

Fig. 7 is an appearance view of a sliding-type portable terminal according to a third embodiment.

This portable terminal has a sliding structure that connects the first housing 31 and the second housing 32 to each other slidably in the longitudinal direction or for the first housing 31 rotatably (slidably) to the right and left of the second housing 32. The imaging portion (camera) 108 is disposed around the displaying portion 105.

In the sliding-type portable terminal of the third embodiment, a magnet is installed as the sensor 106 and a magnetic sensor that detects the magnetism of the magnet is used.

The magnetic sensor 33 and the magnet 34 of the portable terminal having the fist housing 31 and the second housing 32 that are slidable in the longitudinal direction are disposed at positions with which, when the first housing 31 and the second housing 32 are slid such that the housings 31 and 32 overlap, and the magnetic sensor 33 and the magnet 34 are respectively brought to positions adjacent to each other, the magnetism of the magnet is detected by the magnetic sensor (closed state) and, when the first housing 31 and the second housing 32 are slid in the longitudinal direction such that the housings 31 and 32 are separated away, and the magnetic sensor 33 and the magnet 34 are respectively brought to positions away from each other, the magnetism of the magnet is not detected by the magnetic sensor (opened state) (Fig. 7).

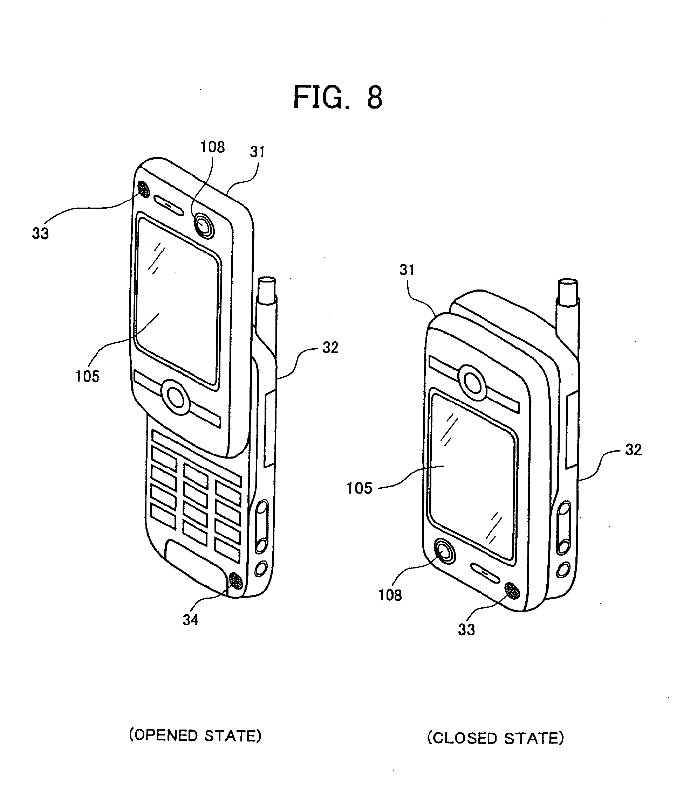

The magnetic sensor 33 and the magnet 34 of the portable terminal in which the first housing 31 slides rotatably (slidably) to the right and left of the second housing 32 are respectively disposed at positions with which, when the first housing 31 and the second housing 32 are rotated (slid) against each other such that the housings 31 and 32 overlap, and the magnetic sensor 33 and the magnet 34 are respectively brought to positions adjacent to each other, the magnetism of the magnet is detected by the magnetic sensor (closed state) and, when the first housing 31 and the second housing 32 are rotated (slid) against each other that the housings 31 and 32 are separated away, and the magnetic sensor 33 and the magnet 34 are respectively brought to positions away from each other, the magnetism of the magnet is not detected by the magnetic sensor (opened state) (Fig. 8).

Because the functional configuration of the third embodiment is same as that of the first embodiment (see Fig. 3), description will be given for the points that differ from those of the first embodiment.

When the magnetic sensor 33 detects the magnetism of the magnet 34, the state detecting portion 17 judges that the terminal is in the closed state and, when the magnetic sensor 33 stops detecting the magnetism, judges that the terminal becomes to be in the opened state, and notifies the controlling portion 11 that the portable terminal becomes to be in the checkable state.

Though the state detecting portion 17 judges the state where the matching can be executed, using the magnet 34 and the magnetic sensor 33, the portion 17 may judge the state from occurrence of variation to a pressure sensing state due to sliding of the housings by providing an item with which it can be seen that the user makes the portable terminal start to be used.

Since the matching operation of the third embodiment is same as that of the above second embodiment, description thereof is omitted herein.

### <Fourth Embodiment>

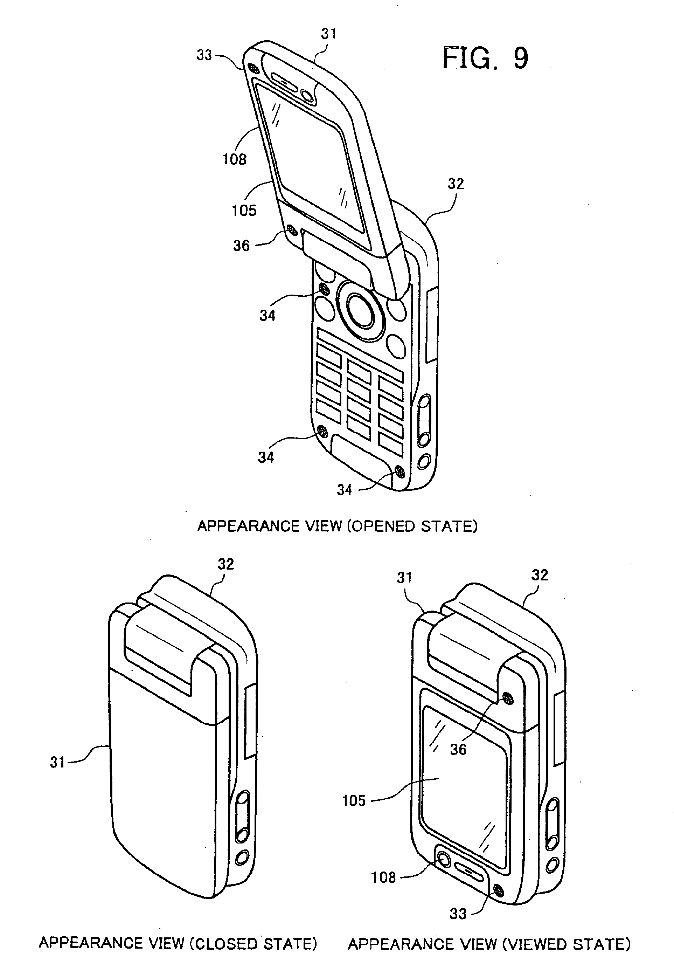

Fig. 9 is an appearance view of a portable terminal according to a fourth embodiment.

This portable terminal has the first housing 31 and the second housing 32 that are connected to each other such that the housings can be freely opened and closed and that can be folded, and is a display-portion-rotatable portable terminal of which the first housing 31 can be freely rotated. As shown in Fig. 9, the terminal takes an "opened state" where the two housings are separated away and opened, a "closed state" where the two housings are brought adjacent to each other and closed, and a "viewed state" where a user can view the displaying portion. The imaging portion (camera) 108 is disposed in the upper portion and inside of the first housing 31. The imaging portion 108 incorporates an automatic focusing function.

In the portable terminal of the fourth embodiment, a magnet is installed as the sensor 106 and a magnetic sensor that detects the magnetism of the magnet is used. The magnet and the magnetic sensor includes two magnetic sensors 33 and 36 and three magnets 34 and are disposed as follows as exemplified in Fig. 9 to recognize the three states of the portable terminal ("opened state", "closed state", "viewed state").
(1) "Closed State":
   The first magnetic sensor 33, the second magnetic sensor 36 and the magnets 34 are disposed respectively at positions with which the sensors 33 and 36 are brought to positions close to the magnet 34 such that the sensors 33 and 36 can detect the magnetism of the magnet 34.
(2) "Opened State":
   The first magnetic sensor 33, the second magnetic sensor 36 and the magnets 34 are disposed respectively at positions with which the sensor 33 is brought to a position away from the magnet 34 such that the sensor 33 does not detect the magnetism and the sensor 36 is brought to a position close to the magnet 34 such that the sensor 36 detects the magnetism.
(3) "Viewed State":
   The first magnetic sensor 33, the second magnetic sensor 36 and the magnets 34 are disposed respectively at positions with which the sensor 33 is brought to a position close to the magnet 34 such that the sensor 33 detects the magnetism and the sensor 36 is brought to a position away from the magnet 34 such that the sensor 36 does not detect the magnetism.

Because the functional configuration of the fourth embodiment is same as that of the first embodiment (see Fig. 3), description will be given for the points that differ from those of the first embodiment.

When both of the first magnetic sensor 33 and the second magnetic sensor 36 detect the magnetism of the magnet 34 as above, the state detecting portion 17 judges that the portable terminal is in the "closed state" and is not in the matching state, and does not notify the controlling portion 11.

When the first magnetic sensor 33 does not detect the magnetism of the magnet 34 and the second magnetic sensor 36 starts to detect the magnetism of the magnet 34, the state detecting portion 17 judges that the terminal is in the "opened state" and becomes to be in the matching state, and notifies the controlling portion 11 of this fact.

When the first magnetic sensor 33 detects the magnetism of the magnet 34 and the second magnetic sensor 36 stops to detect the magnetism of the magnet 34, the state detecting portion 17 judges that the terminal is in the "viewed state" and, at the same time, when the sensor 106 detects that a user touches the first housing 31, the second housing 32, the displaying portion 105 having a touch panel, etc. , the state detecting portion 17 judges that the terminal is in the matching state, and notifies the controlling portion 11 of this fact. Otherwise, in the case where the sensor 106 incorporates an acceleration sensor or a sound recognition sensor, when the terminal is in the "viewed state", based on the variation of the detected value by the sensor 106, the portion 17 may judge that the terminal becomes to be in the matching state.

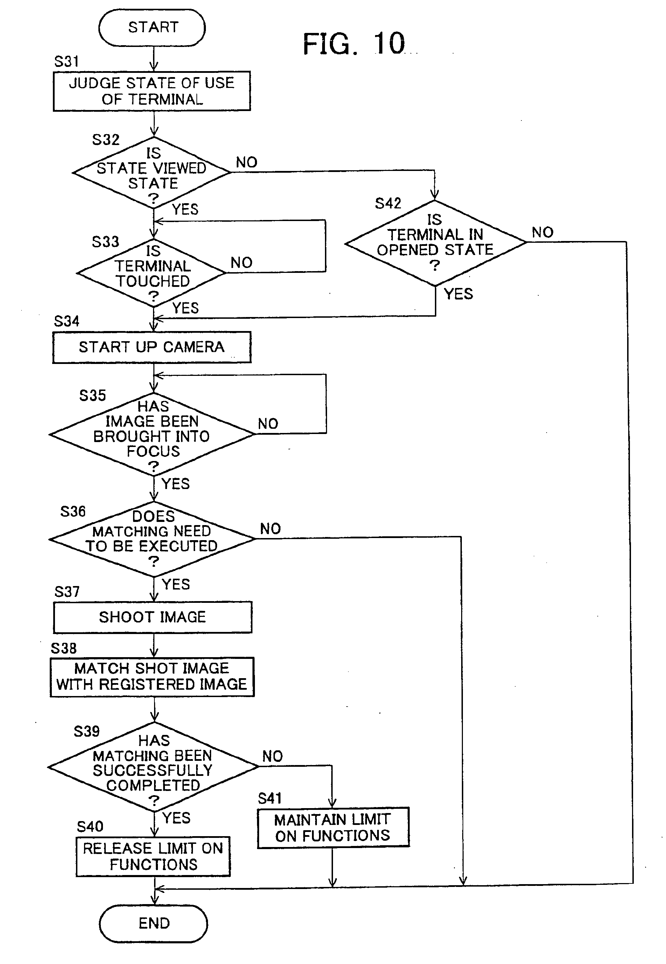

Referring to a flowchart of Fig. 10, description will be given for a procedure of executing the matching of the person to be permitted by the portable terminal according to the fourth embodiment.

The state detecting portion 17 detects the opened state, the viewed state, or the closed state and judges the state of use of the terminal (step S31).

At this step, the portion 17 matches the first magnetic sensor 33 and the second magnetic sensor 36 for the state of detection of magnetism, and judges any one of the following states of use.
(1) When both of the first magnetic sensor 33 and the second magnetic sensor 36 detect the magnetism, the portion 17 judges that the terminal is in the "closed state". When both of the first magnetic sensor 33 and the second magnetic sensor 36 do not detect the magnetism, the portion 17 also handles the state of the terminal to be the "closed state".
(2) When the first magnetic sensor 33 detects the magnetism and the second magnetic sensor 36 does not detect the magnetism, the portion 17 judges that the terminal is in the "viewed state".
(3) When the first magnetic sensor 33 does not detect the magnetism and the second magnetic sensor 36 detects the magnetism, the portion 17 judges that the terminal is in the "opened state".

When the portable terminal is in the "viewed state" (step S32/YES), the terminal waits to be in a predetermined state (step S33).

The predetermined state refers to, for example, a state where the sensor 106 detects that a user touches the first housing 31, the second housing 32, the displaying portion 105 having a touch panel, the operating portion 111 (any key thereof), etc., or the case where, when the sensor 106 incorporates an acceleration sensor or a sound recognition sensor, the sensor 106 detects that a user touches the portable terminal based on the variation of the detected value of the sensor.

When the controlling portion 11 receives a notice notifying that the user touches the portable terminal (step S33/YES), the terminal is shifted into the image matching mode and the image acquiring portion 14 starts up the imaging portion (camera) 108 (step S34). The imaging portion 108 starts focusing on the item presented by the user (for example, the face) using the automatic focusing function (step S35). The terminal inquires of the user whether to execute the matching. When an input indicating that the matching should be executed is received (step S36/YES), the procedure is advanced to step S37.

When an input indicating that the matching should not be executed is received from the user (step S36/NO), the procedure may be ended without releasing a predetermined limit (for example, locking) on the functions of the portable terminal for the user or the terminal may start up a second matching means (using a finger print, a vein, an iris, a password, etc.). Though the second matching method may be a predetermined method, the terminal may use the matching method that is registered in the matching information storing portion 13 for the case where the matching has been failed.

The matching may be executed automatically without inquiring about the matching.

When the user specifies that the matching should be executed, an image is shot (step S37).

In this case, when the image is shot, an image inputted by the imaging portion 108 is displayed on the displaying portion 105 and a message is also displayed stating that processing is being executed in the image matching mode. The image having been shot is delivered from the image acquiring portion 14 to the controlling portion 11.

The controlling portion 11 starts up the matching portion 15. At this time, the matching portion 15 may be started up together with the image acquiring portion 14 when the terminal is shifted to be in the image matching mode.

The matching portion 15 compares the image information acquired by the image acquiring portion 14 with the matching information that the person to be permitted has presented and that is stored in the matching information storing portion 13, and the judging portion 16 judges whether the two images satisfy a predetermined matching condition (step S38).

When the judging portion 16 judges that the two images satisfy the predetermined matching condition (step S39/YES), the imaging portion 108 is stopped and the predetermined limit on the functions of the portable terminal (for example, the locking) for the user is released. The display on the displaying portion 105 is switched to a display screen for the functions permitted for the user and the terminal waits for the operation by the user (step S40).

When the judging portion 16 judges that the two images do not satisfy the predetermined matching condition (step S39/NO), the imaging portion 108 is stopped, and the limit on the functions for the user is maintained (step S41).

When the portable terminal is in the "opened state" (step S42/YES), the portion 16 judges that the terminal should be shifted to the image matching mode, the procedure is advanced to step S34, and the matching process is started.

When the portable terminal is in the "closed state" (step S42/NO), the terminal is not shifted into the image matching mode and the matching process is not executed.

When the matching is not completed or the matching is failed, the notice for warning and the time limit on the matching, etc., are same as those of the above the first, the second, and the third embodiments and the description thereof is omitted.

### <Fifth Embodiment>

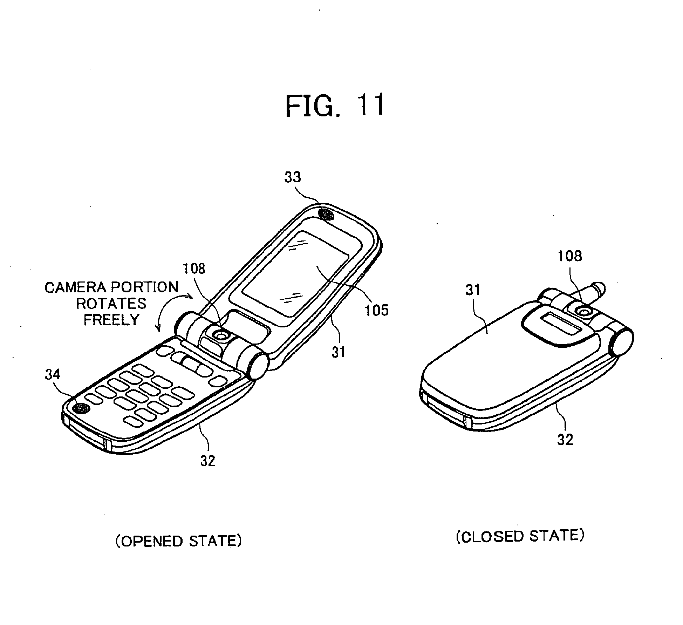

Fig. 11 is an appearance view of a portable terminal having a rotatable camera according to a fifth embodiment.

Though this portable terminal is a folding-type portable terminal same as that of the second embodiment, the imaging portion (camera) 108 thereof is rotatable for 180 degrees and, when the first housing 31 and the second housing 32 are opened, can execute "ordinary shooting" for which the imaging portion (camera) 108 faces outward and "oneself shooting" for which the portion 108 faces inward.

To detect whether the first housing 31 and the second housing 32 are opened or closed for this type of portable terminal, magnets and magnetic sensors same as those of the second embodiment are installed.

When the first housing 31 and the second housing 32 are opened in the case of this type of portable terminal, the rotatable camera 108 does not always face in the direction to capture the face of a user, that is, inward. Therefore, an angular sensor to detect the orientation of the rotatable camera 108 is installed on the connecting portion of the housings.

Based on the angle detected by the angular sensor, the state detecting portion 17 judges which direction the imaging portion (rotatable camera) 108 faces when the first housing 31 and the second housing 32 are opened and, when the portion 108 does not face inward, that terminal does not start the matching. The matching is started when the rotatable camera 108 faces inward.

However, when the target of the matching is not the face and a property, the shape of a hand, or handwriting is used, the matching is started when the rotatable camera 108 faces outward.

Because the functional configuration of the fifth embodiment is same as that of the second embodiment, description thereof will be omitted.

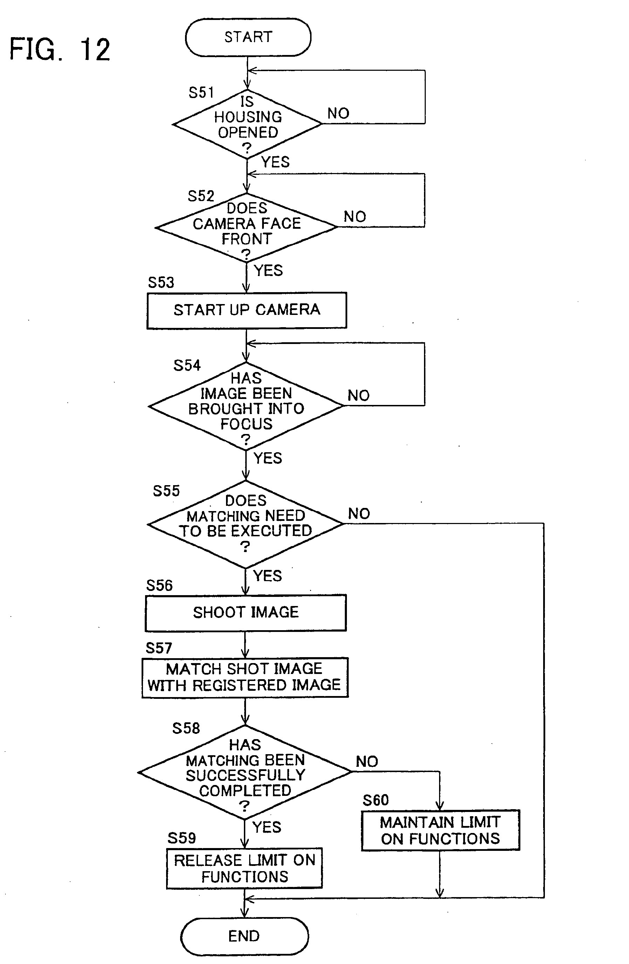

Referring to a flowchart of Fig. 12, description will be given for a procedure of executing the matching of the person to be permitted by the portable terminal according to the fifth embodiment. Though the description will be given assuming that the face of a user is used for the matching, the procedure can be applied equally to the case where a property, etc., are used.

The state detecting portion 17 detects that the portable terminal becomes to be in the checkable state, and notifies the controlling portion 11 of this fact (step S51).

At this step, because the magnetism that the magnetic sensor 33 has been detecting stops to be detected when the user has put the first housing 31 and the second housing 32 into the opened state from the closed state thereof, the state detecting portion 17 judges that the user has opened the housings. Otherwise, when the sensor 106 incorporates an angular sensor for the angle of the opening and closing of the housings, based on the variation of the detected value by the sensor 106, the portion 17 may judge that a user uses the portable terminal.

When the controlling portion 11 receives the notice informing that the terminal becomes to be in the opened state thereof (step S51/YES), the terminal is shifted into the image matching mode and the image acquiring portion 14 is started up. The angular sensor detects the angle by which the imaging portion (rotatable camera) 108 is oriented and, without starting up the imaging portion 108, the terminal waits for the imaging portion 108 to be oriented inward (step S52/NO).

When the state detecting portion 17 judges that the imaging portion 18 faces front and inward (step S52/YES), the imaging portion (camera) 108 is started up (step S53).

When the imaging portion 108 is started up, the imaging portion 108 starts focusing on the item presented by the user (for example, the face) using the automatic focusing function (step S54). The terminal inquires of the user, who is focused on, whether to execute the matching. When an input indicating that the matching should be executed is received (step S55/YES), the procedure is advanced to step S56.

When an input indicating that the matching should not be executed is received from the user (step S55/NO), the procedure may be ended without releasing a predetermined limit (for example, locking) on the functions of the portable terminal for the user or the terminal may start up a second matching means (using a finger print, a vein, an iris, a password, etc.). Though the second matching method may be a predetermined method, the terminal may use the matching method that is registered in the matching information storing portion 13 for the case where the matching has been failed.

The matching may be executed automatically without inquiring about the matching.

When the user specifies that the matching should be executed, an image is shot (step S56).

In this case, when the image is shot, an image inputted by the imaging portion 108 is displayed on the displaying portion 105 and a message is also displayed stating that processing is being executed in the image matching mode. The image having been shot is delivered from the image acquiring portion 14 to the controlling portion 11.

The controlling portion 11 starts up the matching portion 15. At this time, the matching portion 15 may be started up together with the image acquiring portion 14 when the terminal is shifted to be in the image matching mode.

The matching portion 15 compares the image information acquired by the image acquiring portion 14 with the matching information that has been presented by the person to be permitted and stored in the matching information storing portion 13, and the judging portion 16 judges whether the two images satisfy a predetermined matching condition (step S57).

When the judging portion 16 judges that the two images satisfy the predetermined matching condition (step S58/YES), the imaging portion 108 is stopped and the predetermined limit on the functions of the portable terminal (for example, the locking) for the user is released. The display on the displaying portion 105 is switched to a display screen for the functions permitted for the user and the terminal waits for the operation by the user (step S59).

When the judging portion 16 judges that the two images do not satisfy the predetermined matching condition (step S58/NO), the imaging portion 108 is stopped, and the limit on the functions for the user is maintained (step S60).

When the matching is not completed or the matching is failed, the notice for warning and the time limit on the matching, etc., are same as those of the above first to fourth embodiments and the description thereof is omitted.

In the fifth embodiment, when the first housing 31 and the second housing 32 are opened, the state detecting portion 17 judges that the terminal becomes to be in the checkable state. However, in the case of providing a rotatable camera to a straight-type portable terminal as the first embodiment, when the portion 17 detects that the camera is rotated, the portion 17 starts up the rotatable camera, and the camera is rotated to a position at which the camera can shoot a property to be matched, the state detecting portion 17 may judge that the terminal becomes to be in the checkable state.

### <Sixth Embodiment>

According to a sixth embodiment: a portable terminal is connected to a matching server by a network; the portable terminal shoots an image for matching described in the above embodiments; image information and information to identify the portable terminal are sent to the matching server; the terminal receives the result of judgment by the matching from the matching server; and the limit on the functions of the portable terminal is controlled according to the judgment result.

The matching server registers in advance in the matching information storing portion the identifying information of the portable terminal and the image information to match the person to be permitted who is to be given the permission of use of the terminal, correlating each other.

The matching server takes out from the matching information storing portion the image information corresponding to the identifying information of the portable terminal received from the terminal, and matches the image information taken with the image information received. When this matching satisfies a predetermined matching condition, the matching server notifies the portable terminal that the matching is successfully finished.

When the portable terminal receives the notice of the success of the matching, the terminal releases the limit of the functions on the terminal for the user.

When the matching server judges the failure of the matching, the server transmits a report informing that the matching is failed to the portable terminal.

When the portable terminal receives the notice of the failure of the matching, the limit on the functions of the terminal for the user is maintained and the terminal may display a message "Person to Be Permitted Not Confirmed" on the displaying means of the terminal, or a reporting means may warn that "The Person to Be Permitted Is Not Confirmed" using colors or sound.

The matching server may notify a notice informing "the portable terminal (of the telephone number or the serial number of the terminal) is operated by a person who is not the person to be permitted" to an address to notice registered in advance using a communicating means. Otherwise, the server may send a notice of the above contents to which the image information received from the portable terminal is attached.

### <Other Embodiments>

The present invention is not limited only to the above embodiments. The object of the present invention is surely achieved also by: describing the functions configuring the portable terminals of the above embodiments respectively in programs; writing the programs in advance into a recording medium such as a ROM; setting the recording medium to the portable terminal; and executing the programs. In this case, the programs themselves read from the recording medium realize the functions of the above embodiments and the programs and the recording medium recorded with the programs constitute the present invention.

The above programs includes programs of the case where the functions of the above embodiments are realized by the programs that process in cooperation with an operating system, an application program, etc. , according to instructions of the programs.

The programs that realize the functions of the above embodiments may be provided in a recording medium of any form of disk type (for example, a magnetic disk and an optical disk), a card type (for example, a memory card and an optical card), a semiconductor memory type (for example, a ROM and a non-volatile memory), and a tape type (for example, a magnetic tape and a cassette tape). Otherwise, the programs stored in a storing apparatus may be directly supplied from a server computer through a network. In this case, the storing apparatus of the server computer is also included in the present invention as a recording medium.

Reduction of costs and improvement in portability or versatility can be facilitated by describing the functions of the above embodiments in programs and distributing them as above.

## Claims

1. A portable terminal with a first housing (31) and a second housing (32) connected to each other in which an imaging means (14, 108) is disposed on the first housing (31), comprising:
a state detecting means (17) configured to detect an opened/closed state of the first housing (31) and the second housing (32) of the portable terminal;
a matching information storing means (13) configured to store first image information for matching;
a matching means (15) configured to matche whether second image information acquired by the imaging means (14, 108) and first image information stored in the matching information storing means (13) satisfy a predetermined matching condition; and
a controlling means (11, 114) configured to cause to execute operation of a function of the portable terminal, the function being permitted to a user when a result of the matching by the matching means (15) satisfies the predetermined matching condition, wherein
when the state detecting means (17) judges that the opened/closed state becomes an opened state, starting up of the imaging means (14, 108) and focusing of the imaging means (14, 108) on an object are performed, and
the imaging means (14, 108) shoots the object focusing on it and acquires second image information.

2. The portable terminal of claim 1, wherein
the first housing (31) comprises a displaying means (105), and
the second housing (32) comprises an operating means (111).

3. The portable terminal of claim 1 or 2, wherein
when focusing is completed on the object, shooting is performed automatically.

4. The portable terminal of claim 1 or 2, wherein
when focusing is completed on the object, the user is inquired as to whether to execute the matching.

5. An image information matching method of a portable terminal with a first housing (31) and a second housing (32) connected in which an imaging means (14, 108) is disposed on the first housing (31), comprising:
a state detecting step of detecting an opened/closed state of the portable terminal;
a step of starting up the imaging means (14, 108) when an opened state is detected;
a matching step of matching whether second image information acquired by the imaging means (14, 108) and first image information stored in a matching information storing means (13) satisfy a predetermined matching condition; and
a step of causing to execute operation of a function of the portable terminal, the function being permitted to an operator when a result of the matching by the matching step satisfies the predetermined matching condition.

## Patentansprüche

1. Tragbares Datenendgerät mit einem ersten Gehäuse (31) und einem zweiten Gehäuse (32), die miteinander verbunden sind, und in dem ein Abbildungsmittel (14, 108) angeordnet ist an dem ersten Gehäuse (31), umfassend:
ein Zustands-Erkennungs-Mittel (17), welches so konfiguriert ist, dass dieses einen geöffneten/geschlossenen Zustand des ersten Gehäuses (31) und des zweiten Gehäuses (32) des tragbaren Datenendgerätes detektiert;
ein Speichermittel (13) zum Vergleich von Informationen, welches so konfiguriert ist, dass dieses erste Bildinformationen zum Vergleich speichert;
ein Vergleichsmittel (15), welches so konfiguriert ist, dass dieses vergleicht, ob zweite Bildinformationen, welche von den Abbildungsmitteln (14, 108) verschafft werden und die ersten Bildinformationen, die in dem Mittel (13) zum Vergleich gespeicherter Informationen gespeichert sind, eine vorgegebene Vergleichsbedingung erfüllen; und
ein Steuerungsmittel (11, 114), welches so konfiguriert ist, dass dieses den Betrieb einer Funktion des tragbaren Datenendgerätes ausführt, wobei die Funktion für einen Nutzer erlaubt ist, wenn ein Ergebnis des Vergleichs durch die Vergleichsmittel (15) eine vorgegebene Vergleichsbedingung erfüllt, wobei
wenn die Zustands-Erkennungs-Mittel (17) entscheiden, dass der geöffnete/geschlossene Status ein geöffneter Status ist, die Abbildungsmittel (14, 108) gestartet werden und ein Fokussieren der Abbildungsmittel (14, 108) auf einen Gegenstand durchgeführt wird und
die Abbildungsmittel (14, 108) das Objekt, auf das diese fokussiert sind, aufnehmen und eine zweite Bildinformation gewinnen.

2. Tragbares Datenendgerät nach Anspruch 1,
wobei das erste Gehäuse (31) ein Anzeigemittel (105) umfasst und das zweite Gehäuse (32) ein Bedienmittel (111) umfasst.

3. Tragbares Datenendgerät nach Anspruch 1 oder 2,
wobei, sobald das Fokussieren auf das Objekt beendet ist, die Bildaufnahme automatisch durchgeführt wird.

4. Tragbares Datenendgerät nach Anspruch 1 oder 2,
wobei wenn das Fokussieren auf dem Gegenstand beendet ist der Bediener danach gefragt wird, ob der Vergleich durchgeführt werden soll.

5. Ein Verfahren zum Vergleich von Bildinformationen eines tragbaren Datenendgeräts mit einem ersten Gehäuse (31) und einem zweiten Gehäuse (32), die miteinander verbunden sind, in dem ein Abbildungsmittel (14, 108) angeordnet ist in dem ersten Gehäuse (31), umfassend:
einen Schritt zur Detektion eines Offen/Geschlossen-Status des tragbaren Datenendgeräts;
einen Verfahrensschritt des Startens des Abbildungsmittels (14, 108) wenn ein geöffneter Zustand detektiert ist;
einen Vergleichsschritt zum Vergleich, ob eine zweite Bildinformation, die gewonnen wurde durch das Abbildungsmittel (14, 108) und eine erste Bildinformation, die gespeichert ist in einen Speichermittel zum Vergleich von Information (13), eine vorgegebene Vergleichsbedingung erfüllen und
einen Schritt, der die Ausführung einer Operation einer Funktion des tragbaren Datenendgerätes bewirkt, wobei die Funktion für einen Benutzer erlaubt wird, wenn das Ergebnis des Vergleichs in dem Vergleichsschritt die vorgegebene Vergleichsbedingung erfüllt.

## Revendications

1. Terminal portable avec un premier boîtier (31) et un second boîtier (32) reliés entre eux, dans lequel des moyens d'imagerie (14, 108) sont disposés sur le premier boîtier (31),
des moyens de détection d'état (17) qui sont conçus pour détecter un état ouvert/fermé du premier boîtier (31) et du second boîtier (32) du terminal portable ;
des moyens de stockage d'informations de comparaison (13) qui sont conçus pour stocker des premières informations d'image pour la comparaison ;
des moyens de comparaison (15) qui sont conçus pour procéder à une comparaison pour voir si des secondes informations d'image recueillies par les moyens d'imagerie (14, 108) et les premières informations d'image stockées dans les moyens de stockage d'informations de comparaison (13) satisfont à une condition de comparaison prédéterminée ; et
des moyens de contrôle (11, 114) qui sont conçus pour provoquer l'exécution d'une fonction du terminal portable, cette fonction étant permise à un utilisateur quand un résultat de la comparaison réalisée par les moyens de comparaison (15) satisfait à la condition de comparaison prédéterminée, étant précisé
que lorsque les moyens de détection d'état (17) jugent que l'état ouvert/fermé devient un état ouvert, la mise en marche des moyens d'imagerie (14, 108) et leur mise au point sur un objet sont effectuées, et
que les moyens d'imagerie (14, 108) prend l'objet en photo en faisant la mise au point sur celui-ci, et recueille les secondes informations d'image.

2. Terminal portable de la revendication 1, étant précisé
que le premier boîtier (31) comprend des moyens d'affichage (105) et
que le second boîtier (32) comprend des moyens de commande (111).

3. Terminal portable de la revendication 1, étant précisé que lorsque la mise au point est faite sur l'objet, la prise de vue est effectuée automatiquement.

4. Terminal portable de la revendication 1, étant précisé que lorsque la mise au point est faite sur l'objet, l'utilisateur est interrogé pour savoir s'il faut exécuter la comparaison.

5. Procédé de comparaison d'informations d'image d'un terminal portable avec un premier boîtier (31) et un second boîtier (32) reliés entre eux, dans lequel des moyens d'imagerie (14, 108) sont disposés sur le premier boîtier (31), comprenant :
une étape de détection d'état qui détecte un état ouvert/fermé du terminal portable ;
une étape de mise en marche des moyens d'imagerie (14, 108) quand un état ouvert est détecté ;
une étape de comparaison qui procède à une comparaison pour voir si les secondes informations d'image recueillies par les moyens d'imagerie (14, 108) et les premières informations d'image stockées dans les moyens de stockage d'informations de comparaison (13) satisfont à une condition de comparaison prédéterminée ; et
une étape qui provoque l'exécution d'une fonction du terminal portable, cette fonction étant permise à un utilisateur quand un résultat de la comparaison réalisée par l'étape de comparaison satisfait à la condition de comparaison prédéterminée.
